# EUROPEAN PATENT APPLICATION

(11) **EP 3 525 149 A1**
(43) Date of publication of application: **14.08.2019**
(21) Application number: 19156639.7
(22) Date of filing: 12.02.2019
(51) Int. Cl.: G06Q 20/20, G07G 1/01

(54) **COMMODITY SALES DATA REGISTRATION DEVICE AND COMMODITY SALES DATA REGISTRATION METHOD**

(30) Priority: 13.02.2018 JP 2018022791
(71) Applicant: Toshiba Tec Kabushiki Kaisha, Shinagawa-ku Tokyo (JP)
(72) Inventor: Yajima, Shinsuke, Tokyo 141-8562 (JP)
(74) Representative: Hoffmann Eitle

(57) **Abstract**

A registration device is configured to communicate with one or more checkout devices in a checkout system. The registration device includes a scanner configured to scan each of one or more commodities to be purchased by a customer, a communication interface configured to communicate with the checkout devices, a first display facing an operator side, a second display facing a customer side, a third display facing the operator side, and a controller configured to register the commodities scanned by the scanner, control the first display to display commodity information about the registered commodities, control the second display to display the commodity information, control the communication interface to receive from each checkout device status information indicating an operation status of the checkout device, and control the third display to display the operation status of each checkout device based on the received status information.

## Description

### CROSS-REFERENCE TO RELATED APPLICATION

This application is based upon and claims the benefit of priority from Japanese Patent Application No. 2018-022791, filed in February 13, 2018, the entire contents of which are incorporated herein by reference.

### FIELD

Embodiments described herein relate generally to a commodity sales data registration device and a commodity sales data registration method.

### BACKGROUND

In the related art, at retail shops such as supermarkets, a checkout method called semi self-service type is used in which registration of a commodity to be purchased and its checkout are performed by different devices. In a semi self-service checkout system, once an operator has completed the registration for all commodities to be purchased, the registration device transfers the commodity registration information to a checkout device. Subsequently, the customer can complete the checkout using the checkout device based on the transferred commodity registration information.

In such a commodity sales data registration device in the related art, an operation state of the checkout device, such as an error state, is displayed on a monitor of the registration device to let the operator know the status. However, since the notification is displayed on the monitor of the registration device as interrupt information, there is a need for a semi self-service checkout system that does not bother the operator in registering commodities while telling him or her the status of the checkout device.

### SUMMARY OF THE INVENTION

One of the objects of the present invention is to improve prior art techniques and overcome at least some of the prior art problems as for instance above illustrated.

According to a first aspect of the present invention, it is provided a registration device configured to communicate with one or more checkout devices in a checkout system, the registration device comprising: a scanner configured to scan each of one or more commodities to be purchased by a customer; a communication interface configured to communicate with the checkout devices; a first display facing an operator side; a second display facing a customer side; a third display facing the operator side; and a controller configured to register the commodities scanned by the scanner; control the first display to display commodity information about the registered commodities, control the second display to display the commodity information, control the communication interface to receive from each checkout device status information indicating an operation status of the checkout device, and control the third display to display the operation status of each checkout device based on the received status information.

Optionally, the registration device according the first aspect of the invention, further comprises an input unit, wherein the controller controls the communication interface to transmit the commodity information to one of the checkout devices selected by the operator through the input unit.

Optionally, in the registration device according to the first aspect of the invention, the controller controls the communication interface to transmit the commodity information to one of the checkout devices that is not performing checkout for another customer.

Optionally, in the registration device according to the first aspect of the invention, the operation status indicates whether the checkout device is performing checkout for another customer.

Optionally, in the registration device according to the first aspect of the invention, the operation status indicates whether an error occurs in the checkout device. Optionally, in the registration device according to the first aspect of the invention, the operation status indicates whether an article belonging to another customer has been left in the checkout device.

Optionally, in the registration device according to the first aspect of the invention, the operation status indicates whether bills or coins for change stored in the checkout device are almost empty.

Optionally, in the registration device according to the first aspect of the invention, the third display is detachable.

Optionally, in the registration device according to the first aspect of the invention, the third display is installed on a back surface side of the second display. Optionally, in the registration device according to the first aspect of the invention, the second and the third display are installed such that a lower end of the second display and a lower end of the third display are positioned at approximately the same height.

According to a second aspect of the invention, it is provided a method carried out by a registration device configured to communicate with one or more checkout devices in a checkout system, the method comprising: register one or more commodities scanned by a scanner; displaying, on a first display of the registration device facing an operator side, commodity information about the registered commodities; displaying the commodity information on a second display of the registration device facing a customer side; receiving from each checkout device status information indicating an operation status of the checkout device; and displaying, on a third display of the registration device facing the operator side, the operation status of each checkout device based on the received status information.

Optionally, the method according to the second aspect of the invention further comprises receiving an input from the operator; and transmitting the commodity information to one of the checkout devices specified by the input. Optionally, the method according to the second aspect of the invention further comprises transmitting the commodity information to one of the checkout devices that is not performing checkout for another customer.

Optionally, in the method according to the second aspect of the invention, the operation status indicates whether the checkout device is performing checkout for another customer.

Optionally, in the method according to the second aspect of the invention, the operation status indicates whether an error occurs in the checkout device.

Optionally, in the method according to the second aspect of the invention, the operation status indicates whether an article belonging to another customer has been left in the checkout device.

Optionally, in the method according to the second aspect of the invention, the operation status indicates whether bills or coins for change stored in the checkout device are almost empty.

Optionally, in the method according to the second aspect of the invention, the third display is detachable. Optionally, in the method according to the second aspect of the invention, the third display is installed on a back surface side of the second display.

According to a third aspect of the invention, it is provided a checkout system comprising:
a registration device; and
one or more checkout devices, wherein the registration device comprises: a scanner configured to scan each of one or more commodities to be purchased by a customer; a communication interface configured to communicate with the checkout devices; a first display facing an operator side; a second display facing a customer side; a third display facing the operator side; and a controller configured to register the commodities scanned by the scanner, control the first display to display commodity information about the registered commodities, control the second display to display the commodity information, control the communication interface to receive from each checkout device status information indicating an operation status of the checkout device, and control the third display to display the operation status of each checkout device based on the received status information.

### DESCRIPTION OF THE DRAWINGS

FIG. 1 is a diagram for illustrating a system configuration of a checkout system according to an embodiment.
FIG. 2 is a diagram for illustrating an example of a layout of a registration device and a checkout device in a shop.
FIG. 3A is an external view of the registration device viewed from an operator side.
FIG. 3B is an external view of the registration device viewed from a customer side.
FIG. 4A is an external perspective view illustrating an example of a customer side monitor and an operator side sub-monitor.
FIG. 4B is a side view illustrating the example of the customer side monitor and the operator side sub-monitor.
FIG. 5 is an external perspective view of the checkout device.
FIG. 6 is a block diagram illustrating an example of a hardware configuration of the registration device and the checkout device.
FIG. 7 is a functional block diagram illustrating an example of a functional configuration of the checkout system.
FIG. 8 is a diagram for illustrating an example of a screen displayed on the operator side sub-monitor.
FIG. 9 is a diagram for illustrating an example of a display screen displayed on an operator side monitor when commodity registration is performed.
FIG. 10 is a diagram for illustrating an example of a display screen displayed on the operator side monitor by the display controlling unit when a subtotal button is pressed.
FIG. 11 is a diagram for illustrating an example of a screen displayed on a monitor of the checkout device.
FIG. 12 is a flowchart illustrating an example of a process flow performed by the checkout system.
FIGs. 13A and 13B are external views illustrating a configuration different from that of the registration device.

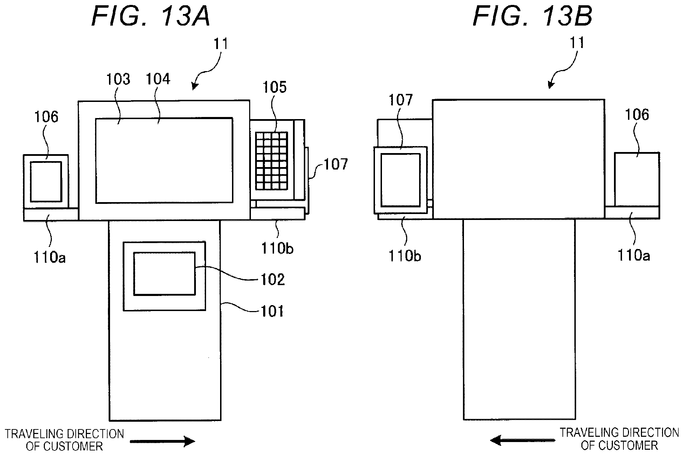

FIG. 13A is an external view of the registration device viewed from the operator side.
FIG. 13B is an external view of the registration device viewed from the customer side.

### DETAILED DESCRIPTION

Embodiments provide a commodity sales data registration device and a commodity sales data registration method capable of informing a state of a checkout device without hindering the progress of registration.

In an embodiment, the registration device is configured to communicate with one or more checkout devices in a checkout system. The registration device includes a scanner configured to scan each of one or more commodities to be purchased by a customer, a communication interface configured to communicate with the checkout devices, a first display facing an operator side, a second display facing a customer side, a third display facing the operator side, and a controller. The controller is configured to register the commodities scanned by the scanner, control the first display to display commodity information about the registered commodities, control the second display to display the commodity information, control the communication interface to receive from each checkout device status information indicating an operation status of the checkout device, and control the third display to display the operation status of each checkout device based on the received status information.

Hereinafter, with reference drawings, a plurality of embodiments will be described. In the following embodiment, an example in which an embodiment described herein is applied to a semi self-service checkout system introduced to a shop such as a supermarket will be described.

### Description of Overall Configuration of Checkout System

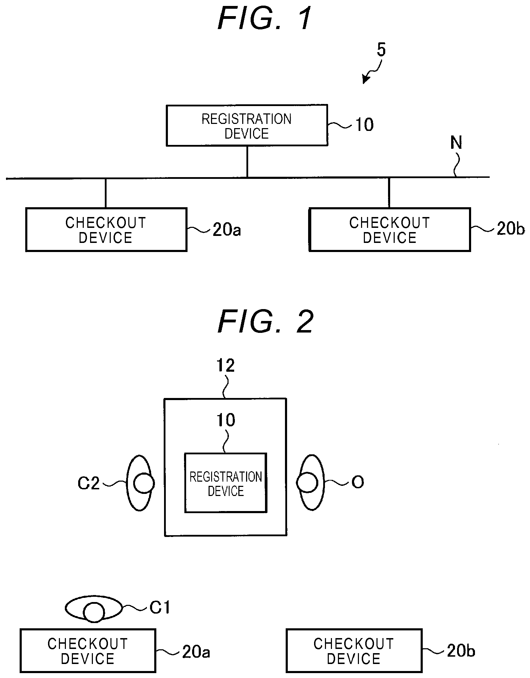

FIG. 1 is a diagram for illustrating a system configuration of a checkout system 5 according to an embodiment. As described in FIG. 1, the checkout system 5 includes one registration device 10 and two checkout devices 20a and 20b. Thereafter, as necessary, the checkout device 20a is called as a checkout machine 1 and the checkout device 20b is called as a checkout machine 2. The registration device 10 and the checkout devices 20a and 20b are connected with each other via a network N such as a local area network (LAN) such that they can communicate with each other. The number of units of the checkout devices 20a and 20b connected to the registration device 10 is not limited to the two units.

FIG. 2 is a diagram for illustrating an example of a layout of the registration device 10 and the checkout devices 20a and 20b in a shop.

As described above in FIG. 2, the registration device 10 and the checkout devices 20a and 20b are separately arranged at a predetermined area in the shop. For example, the registration device 10 is installed on a table shape work table 12. The registration device 10 performs registration of a commodity purchased by a customer C2 by being operated by an operator O who is a clerk.

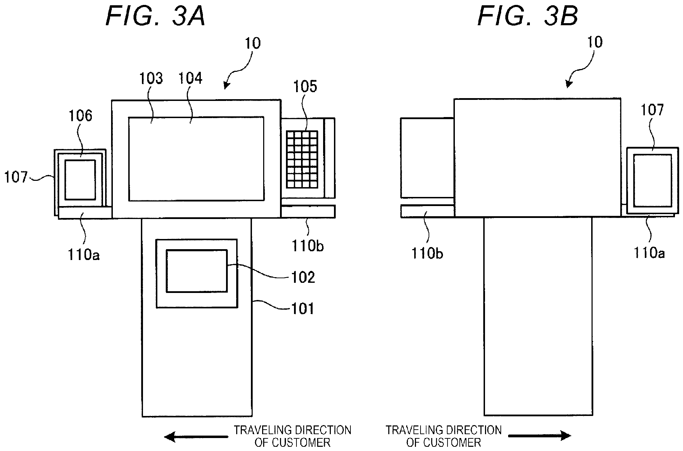

In a layout of FIG. 2, the customer C2 puts the commodities to be purchased in a basket or the like and carries it to the work table 12. By reading each commodity brought by the customer C2 using a scanner 101 (see FIG. 3), the operator O of the registration device 10 inputs commodity identification information (which will be described below) to the registration device 10 which can identify the commodity. At this time, the operator O operates the registration device 10 in a state of facing the customer C2 by interposing the work table 12 therebetween. Accordingly, when registration of the commodity for one transaction is completed, the operator O instructs registration completion of the commodity by operating a touch panel 103 or a keyboard 105 (see FIG. 3).

The registration device 10 transfers the commodity registration information including the commodity information for one transaction, total amount, and the like to the checkout device 20a or the checkout device 20b. It is preferable to select one of the checkout devices 20a or 20b that is not performing checkout process to transfer the commodity registration information. The selection may be performed by the operator O, or may be determined by the registration device 10 itself by receiving an operation state of the checkout devices 20a and 20b.

For example, as described in FIG. 2, when another customer C1 is using the checkout device 20a for checkout, it is preferable that the commodity registration information of the customer C2 is transferred to the checkout device 20b.

Then, the customer C2 inputs the commodity of which the registration is completed in the basket or the like, and carries to, for example, the checkout device 20b to which the commodity registration information is transferred, and performs checkout (settlement) of purchase price of the commodity in the checkout device 20b.

When the checkout devices 20a and 20b are both in use, one of the checkout devices 20a and 20b may be selected by the determination of the operator O.

### Description of Configuration of Registration Device

FIGs. 3A and 3B are external views illustrating an example of the registration device 10. FIG. 3A is an external view of the registration device 10 viewed from an operator O (see FIG. 2) side. In addition, FIG. 3B is an external view of the registration device 10 viewed from a customer C2 (see FIG. 2) side.

As described in FIG. 3A, the registration device 10 includes a vertical type scanner 101 including a reading window 102. The scanner 101 includes an imaging unit (not illustrated) disposed at a corner of the reading window 102.

In addition, the registration device 10 includes an operator side monitor 104 to which the touch panel 103 and the keyboard 105 are attached to an upper portion of the scanner 101. The operator side monitor 104 displays a commodity name, a price, and the like of the commodity imaged by the imaging unit of the scanner 101. For example, the operator side monitor 104 is configured with a liquid crystal panel. The touch panel 103 and the keyboard 105 assist the operator in inputting information about the commodity to be registered.

A customer side monitor 107 is installed in the left side of the operator side monitor 104 toward the customer C2 (see FIG. 2) side. For example, the customer side monitor 107 has a liquid crystal panel and displays an age check screen when the customer C2 purchases a commodity that requires age check.

In addition, an operator side sub-monitor 106 is installed in the left side of the operator side monitor 104 toward the operator O side. For example, the operator side sub-monitor 106 has a liquid crystal panel and displays the operation states of the checkout devices 20a and 20b.

The customer side monitor 107 and the operator side sub-monitor 106 are installed on a mounting arm 110a provided by protruding from the operator side monitor 104 to the left. Mounting structures of the customer side monitor 107 and the operator side sub-monitor 106 will be described below. In addition, the mounting arm 110b protruding to the right is installed in the operator side monitor 104. The mounting arm 110b has the same structure as that of the mounting arm 110a. An operation of the mounting arm 110b will be described while describing a modification example of the present embodiment.

As described in FIG. 3B, the customer side monitor 107 is installed on the downstream side in a traveling direction of the customer C2.

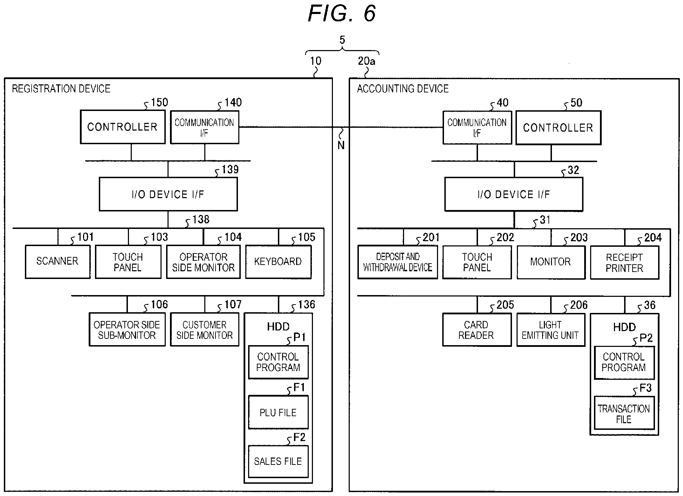

The registration device 10 specifies the commodity including an image imaged by the imaging unit by generic object recognition based on read of a code symbol such as a barcode and a QR code (registered trademark), and the like attached to the commodity or an image of the commodity imaged by the imaging unit. Specifically, the registration device 10 refers to a price look up (PLU) file F1 (see FIG. 6) stored by associating the commodity name, the price, and the like of the commodity with a commodity code for identifying each commodity sold in the shop, and uniquely specifies the commodity corresponding to the commodity code included in the read code symbol.

The generic object recognition for recognizing an object included in an image is described by a recognition technology in the following literature.

Keiji Yanai, "The Present and Future of General Object Recognition", The Transactions of the Information Processing Society, Vol. 48, No. SIG 16 [Search January 5, 2018], Internet <URL: http://mm.cs.uec.ac.jp/IPSJ-TCVIM-Yanai.pdf>

In addition, the registration device 10 displays a screen for receiving inputs such as check and the number of pieces of the specified commodity on the operator side monitor 104. Accordingly, the registration device 10 performs the registration of the specified commodity. The registration means that a result obtained by associating the commodity information of the commodity read from the PLU file F1 with the number of pieces (the number of purchased commodities) and the like of the commodity is stored in a storage device (RAM and HDD 136 (which will be described below) (see FIG. 6)) of the registration device 10.

### Description of Mounting Structure of Customer Side Monitor and Operator Side Sub-Monitor

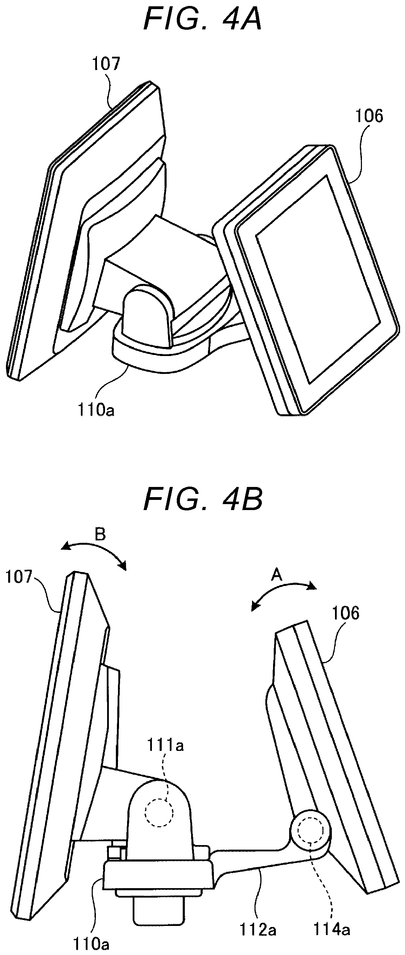

Next, by using FIG. 4, a mounting structure of the customer side monitor 107 and the operator side sub-monitor 106 will be described. FIG. 4A is an external perspective view illustrating an example of the customer side monitor 107 and the operator side sub-monitor 106. FIG. 4B is a side view illustrating an example of the customer side monitor 107 and the operator side sub-monitor 106.

As described in FIG. 4A, the customer side monitor 107 and the operator side sub-monitor 106 are installed on the mounting arm 110a in a state where respective back surface sides face each other.

As described in FIG. 4B, the customer side monitor 107 is rotatably installed in a direction of an arrow B, that is, a height direction of the customer C2 via a shaft 111a to the mounting arm 110a.

In addition, as described in FIG. 4B, the operator side sub-monitor 106 is rotatably installed in a direction of an arrow A, that is, the height direction of the operator O via a shaft 114a to a monitor mounting portion 112a provided in the mounting arm 110a. The operator side sub-monitor 106 can be detached from the monitor mounting portion 112a. Therefore, it is possible to easily perform a replacement work when the operator side sub-monitor 106 fails.

Since the customer side monitor 107 and the operator side sub-monitor 106 are rotatably installed, the operator O can adjust a direction of the operator side sub-monitor 106 in a state that is easy to see. In addition, the customer C2 can adjust a direction of the customer side monitor 107 in the state that is easy to see.

The operator side sub-monitor 106 is approximately smaller than the customer side monitor 107. With this configuration, when the customer C2 sees the customer side monitor 107, it is possible to prevent the operator side sub-monitor 106 from protruding from a back surface side of the customer side monitor 107. As a result, the configuration provides an organized view to the customer C2 who stands in front of the customer side monitor 107.

In addition, respective lower ends of the operator side sub-monitor 106 and the customer side monitor 107 are installed such that their lower ends are positioned at approximately the same height. With this configuration, a space is formed between the customer C2 and the operator O interposing the work table 12 below the operator side sub-monitor 106 and the customer side monitor 107. Therefore, the customer C2 can surely visually recognize that the operator O takes the commodity in hand and holds it on the scanner 101.

### Description of Configuration of Checkout Device

The checkout devices 20a and 20b perform the checkout based on the commodity registration information registered by the registration device 10. Since the checkout devices 20a and 20b have the same configuration, the configuration of the checkout device 20a will be described as an example here. In addition, it is assumed that the checkout device 20a is operated by the customer C1 (see FIG. 2).

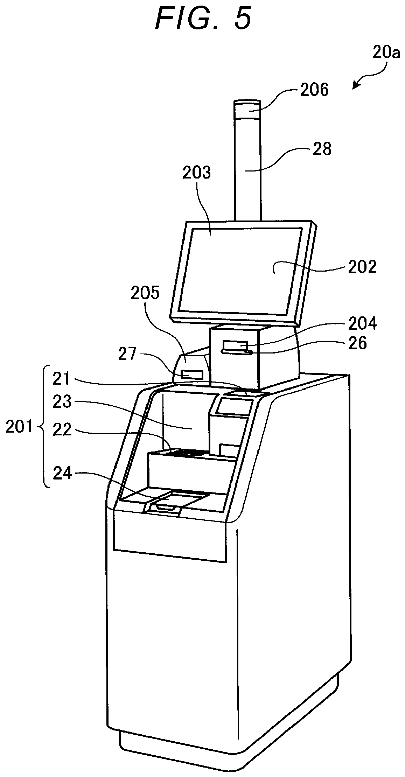

FIG. 5 is an external perspective view of the checkout device 20a. As described in FIG. 5, the checkout device 20a includes a deposit and withdrawal device 201, a touch panel 202, a monitor 203, a receipt printer 204, a card reader 205, and a light emitting unit 206.

The deposit and withdrawal device 201 includes a coin slot 21, a bill slot 22, a bill outlet 23, and a coin outlet 24. The deposit and withdrawal device 201 stores a bill inserted into the bill slot 22 in a bill storage unit (not illustrated). In addition, the deposit and withdrawal device 201 stores a coin inserted into the coin slot 21 in a coin storage unit (not illustrated). Accordingly, the deposit and withdrawal device 201 pays out change of the bill to the bill outlet 23 in response to a change payout request from a controller 50 (see FIG. 6). In addition, the deposit and withdrawal device 201 pays out change of the coin to the coin outlet 24 in response to the change payout request from the controller 50.

The monitor 203 includes the touch panel 202 thereon. For example, the monitor 203 comprises a liquid crystal panel, and displays information on the checkout such as the total amount of one transaction as images and letters. The touch panel 202 is provided on a surface of the monitor 203, and outputs information corresponding to a contact position to the controller 50.

The receipt printer 204 includes a printing unit (not illustrated) and a receipt issue port 26. The receipt printer 204 issues a receipt printed by the printing unit from the receipt issue port 26 by an instruction of the controller 50.

The card reader 205 reads and writes information from and to a credit card, a membership card, or the like inserted into a card insertion slot 27.

The light emitting unit 206 is installed at an upper end of a display pole 28, and emits light when an abnormality occurs in an operation of the checkout device 20a or the like. For example, the light emitting unit 206 includes a light emitting diode (LED) emitting blue light and an LED emitting red light. The light emitting unit 206 may use an LED of a color different from blue and red, and may use a different light emitting element. Since the light emitting unit 206 is provided on the upper end of the display pole 28, it is easy to see not only from the operator O of the registration device 10 but also from other clerks.

The customer C1 makes payment for the purchased commodities, that is, checks out by cash, credit card, electronic money, or the like by operating the checkout device 20a. The checkout device 20a displays the total amount of one transaction based on the commodity registration information received from the registration device 10 and performs the checkout based on the total amount. The commodity registration information includes information such as the total amount for one transaction to be a processing target, the commodity information of the commodity of a transaction target commodity, a device number of the registration device 10 that is a data transmission source, and the name of an assigned operator. The commodity registration information may include other information required for printing the receipt. For example, the commodity registration information may include promotional information for printing the receipt or the like.

### Description of Hardware Configuration of Checkout System

Next, a hardware configuration of the registration device 10 and the checkout device 20a will be described. FIG. 6 is a block diagram illustrating an example of a hardware configuration of the registration device 10 and the checkout device 20a. As described above, the registration device 10 is connected to the checkout device 20b, and has the same configuration as those of the checkout device 20a and the checkout device 20b. Therefore, for simplicity of explanation, only the checkout device 20a is described in FIG. 6.

First, a hardware configuration of the registration device 10 will be described. As described in FIG. 6, the registration device 10 includes a controller 150. The controller 150 includes a central processing unit (CPU) performing the registration, a read-only memory (ROM) that is a storage medium, the random access memory (RAM) (any of these is not illustrated), and the like. The ROM stores various programs performed by the CPU, various data, and the like. The RAM temporality stores data and the program when the program is executed by the CPU. In addition, the RAM stores various screen display data to be displayed on the operator side monitor 104 and the customer side monitor 107. That is, the controller 150 includes a general computer configuration.

The controller 150 performs data communication with the checkout device 20a connected to a network N via a communication interface (I/F) 140.

In addition, the controller 150 is connected to the scanner 101 and the touch panel 103 via an input and output (I/O) device I/F 139 and an internal bus 138. In addition, the controller 150 is connected to the operator side monitor 104, the keyboard 105, the operator side sub-monitor 106, the customer side monitor 107, and a hard disk drive (HDD) 136 via the I/O device I/F 139 and the internal bus 138.

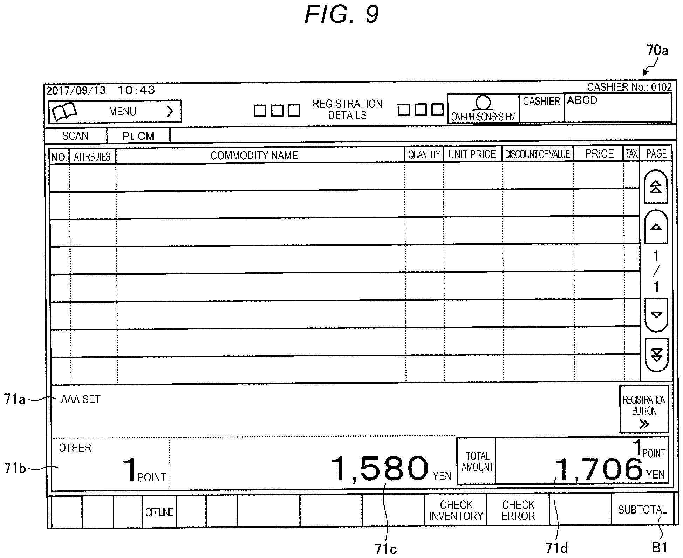

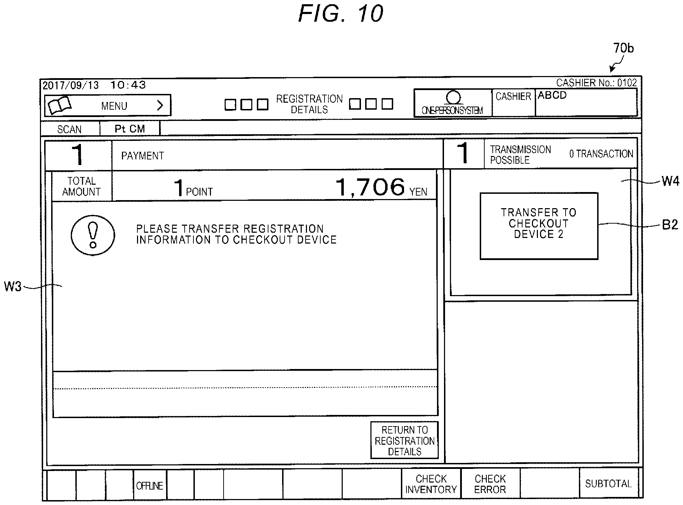

Various operation buttons such as a numeric button (not illustrated), a subtotal button B1 (see FIG. 9), and a transfer button B2 (see FIG. 10) are displayed or disposed on the touch panel 103 or in the keyboard 105. When a plurality of the same commodities are purchased, the numeric button is an operation button for receiving an instruction of the number of commodities. The subtotal button B1 is an operation button for completing commodity reading for one transaction, calculating the total amount for one transaction, and receiving a generation instruction of the commodity registration information including the total amount for one transaction. The transfer button B2 is an operation button for receiving a transfer instruction of transferring the generated commodity registration information to the checkout device 20a. How to arrange these buttons on the touch panel 103 or the keyboard 105 is appropriately designed. In the present embodiment, it is assumed that the numeric button is disposed in the keyboard 105, and the subtotal button B1 and the transfer button B2 are displayed on the touch panel 103.

As an operation example, when the operator O operates the subtotal button B1, the total amount for one transaction is displayed on the customer side monitor 107, and when the operator O operates the transfer button B2 displayed on the operator side monitor 104, the commodity registration information is transmitted to the checkout device 20a. When the checkout device 20a is in an activated state and in a standby state ready for checkout, the commodity registration information is transferred to the checkout device 20a.

Meanwhile, when the transfer button B2 is operated, the registration device 10 completes the registration of the current customer C2, and proceeds to the registration on the next customer. In addition, the customer C2 who has completed the registration by the registration device 10 performs the checkout by using the checkout device 20a. The checkout device 20a receives the commodity registration information about the customer C2 and waits for an operation to start the checkout.

A control program P1, the PLU file F1, and a sales file F2 are stored in the HDD 136. The control program P1 is a program file of causing various controls of the registration device 10 to be performed by being executed by the controller 150. The PLU file F1 stores the commodity code uniquely assigned to each commodity in association with the commodity information relating to the commodity such as the name, price, and commodity classification of the commodity, and the like. In addition, if the registration device 10 is configured to specify the commodity by the generic object recognition (object recognition), the PLU file F1 further stores the feature value of each commodity or a reference image. The feature value is data such as the color tone of the commodity, concave-convex situation on a surface of the commodity, and the like read from the reference image of the commodity. The sales file F2 is a file for storing the commodity registration information generated by the registration device 10.

Returning to FIG. 6 again, a hardware configuration of the checkout device 20a will be described. As described in FIG. 6, the checkout device 20a includes the controller 50. The controller 50 includes CPU performing the checkout, the ROM and the RAM which are storage medium (any of these is not illustrated), and the like. The ROM stores various programs performed by the CPU, various data, and the like. The RAM temporality stores data and the program when the program is executed by the CPU. In addition, the RAM stores various screen display data to be displayed on the monitor 203. That is, the controller 50 includes a general computer configuration.

The controller 50 performs data communication with the registration device 10 connected to the network N via a communication I/F 40.

In addition, the controller 50 is connected to the monitor 203 and the touch panel 202 via an I/O device I/F 32 and an internal bus 31. In addition, the controller 50 is connected to the deposit and withdrawal device 201, the receipt printer 204, the card reader 205, the light emitting unit 206, and an HDD 36 via the I/O device I/F 32 and the internal bus 31.

A control program P2 and a transaction file F3 are stored in an HDD 36. The control program P2 is a program file of causing various controls of the checkout device 20a to be performed by being executed by the controller 50. The transaction file F3 stores is a data file for storing the commodity registration information received from the registration device 10, checkout data to which a result performed by the checkout device 20a is recorded, and the like. The transaction file F3 is used as data in which a transaction history is recorded.

### Description of Functional Configuration of Checkout System

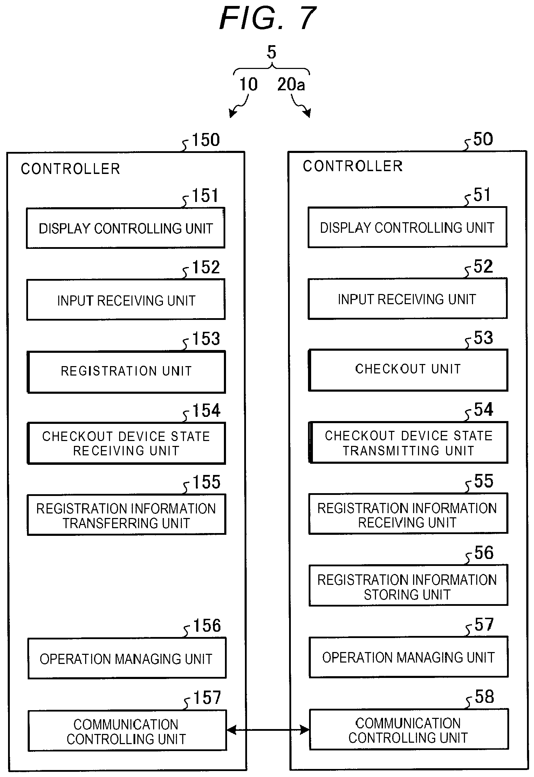

Next, by using FIG. 7, a functional configuration of the checkout system 5 will be described. FIG. 7 is a functional block diagram illustrating an example of a functional configuration of the checkout system 5.

The controller 150 of the registration device 10 extends the control program P1 read from the HDD 136 to the RAM and executes the control program P1 such that a display controlling unit 151, an input receiving unit 152, a registration unit 153, an checkout device state receiving unit 154, a registration information transferring unit 155, an operation managing unit 156, and a communication controlling unit 157 are realized as functional units illustrated in FIG. 7.

The display controlling unit 151 displays the commodity information or the like registered by the registration device 10 on the operator side monitor 104 and the customer side monitor 107. In addition, the display controlling unit 151 displays an operation state of the checkout device 20a on the operator side sub-monitor 106.

The input receiving unit 152 receives various inputs from the scanner 101, the touch panel 103, and the keyboard 105. For example, the input receiving unit 152 receives inputs of the commodity code read from a code symbol by the scanner 101. In addition, when touch is operated on the touch panel 103 with respect to various screens displayed on the operator side monitor 104, the input receiving unit 152 receives an input operation. In addition, when the keyboard 105 is operated, the input receiving unit 152 receives the input operation.

The registration unit 153 performs the registration of the commodity. Specifically, when the commodity code of the commodity is input via the scanner 101 and the touch panel 103, the registration unit 153 reads the commodity information of the commodity from the PLU file F1. Accordingly, when the subtotal button B1 is operated, the registration unit 153 confirms the total amount according to one transaction by completing the registration of the commodity in one transaction. Accordingly, the registration unit 153 generates the commodity registration information in the transaction.

The checkout device state receiving unit 154 receives information indicating the operation state of the checkout devices 20a and 20b from the checkout devices 20a and 20b connected to the registration device 10.

The registration information transferring unit 155 transfers the commodity registration information to the checkout device 20a.

The operation managing unit 156 manages an operation of the registration device 10.

The communication controlling unit 157 controls transmission and reception of various types of information with the checkout device 20a connected via a communication I/F 140. For example, the communication controlling unit 157 transmits the commodity registration information generated by the registration unit 153 to the checkout device 20a. In addition, the communication controlling unit 157 receives information or the like related to the operation state of the checkout device 20a from the checkout device 20a connected via the communication I/F 140.

In addition, the controller 50 of the checkout device 20a copies the control program P2 read from an HDD 36 to the RAM and executes it to perform functions of a display controlling unit 51, an input receiving unit 52, a checkout unit 53, a checkout device state transmitting unit 54, a registration information receiving unit 55, a registration information storing unit 56, an operation managing unit 57, and a communication controlling unit 58, which are illustrated in FIG. 7.

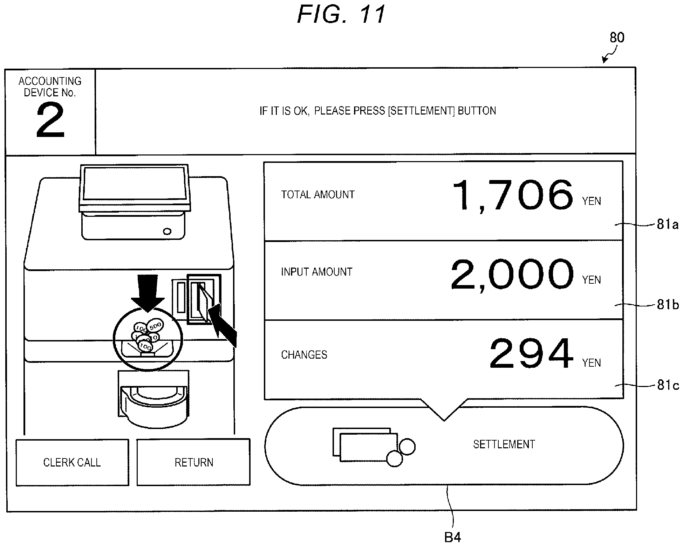

The display controlling unit 51 generates screen display data, and control the monitor 203 to display a screen based on the generated screen display data. For example, the display controlling unit 51 control the monitor 203 to display a settlement screen (see FIG. 11) or the like. In addition, the display controlling unit 51 controls the light emitting unit 206 to indicate an error that occurs in the checkout device 20a.

The input receiving unit 52 receives various inputs from the touch panel 202 and the card reader 205. For example, the input receiving unit 52 receives an input operation operated on the touch panel 202. In addition, the input receiving unit 52 receives information read from a credit card or the like of the customer C2 by the card reader 205.

The checkout unit 53 performs the checkout according to the commodity registration information. Specifically, the checkout unit 53 performs the checkout or settlement on the purchased commodity based on the commodity registration information transferred from the registration device 10.

The checkout device state transmitting unit 54 transmits information indicating the operation state of the checkout device 20a to the registration device 10. The information indicating the operation state of the checkout device 20a is information, such as checking out (performing checkout), waiting (waiting for checkout), depositing error, withdrawal error, residual detection (card, bill, coin, and receipt), change out soon (near empty).

The registration information receiving unit 55 receives the commodity registration information transferred from the registration device 10.

The registration information storing unit 56 stores the commodity registration information received by the registration information receiving unit 55 in the HDD 36 or the like.

The operation managing unit 57 manages an operation of the checkout device 20a.

The communication controlling unit 58 controls transmission and reception of various types of information with the registration device 10 connected via the communication I/F 40. For example, the communication controlling unit 58 receives the commodity registration information or the like from the registration device 10 connected via the communication I/F 40. In addition, the communication controlling unit 58 transmits information indicating the operation state of the checkout device 20a to the registration device 10.

### Description of Screen Displayed by Registration Device

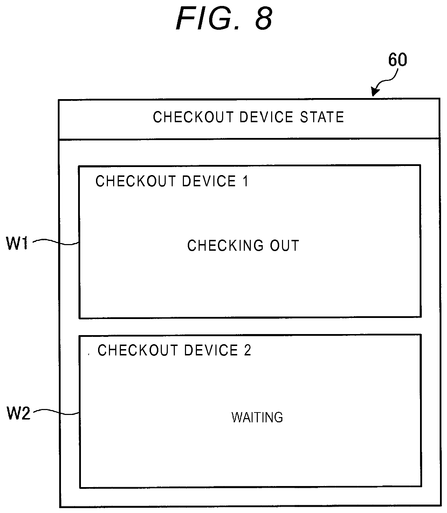

Next, by using FIG. 8, an example of a screen displayed on the operator side sub-monitor 106 by the display controlling unit 151 of the registration device 10 will be described. FIG. 8 is a diagram for illustrating an example of a screen displayed on the operator side sub-monitor 106 of the registration device 10. Particularly, FIG. 8 is a diagram for illustrating an example of a display screen 60 displayed on the operator side sub-monitor 106 when the commodity registration is performed.

As described in FIG. 8, the display controlling unit 151 controls the display screen 60 to display a display window W1 displaying an operation state of the checkout device 20a (i.e., checkout machine 1) and a display window W2 displaying an operation state of the checkout device 20b (i.e., checkout machine 2).

FIG. 8 illustrates that the checkout device 20a is performing the checkout process, and the checkout device 20b is on standby.

The operator O guides the customer C2 to the checkout device 20b in standby by checking contents on the display screen 60 and refrains from guiding the customer C2 to the checkout device 20a performing the checkout. That is, when states of the checkout devices 20a and 20b displayed on the display screen 60 are at least a predetermined state, it is suppressed that the customer C2 is guided to the checkout devices 20a and 20b.

The operation states of the checkout devices 20a and 20b displayed on the display screen 60 by the display controlling unit 151 are not limited to "checking out" and "waiting". That is, an error indication such as "checkout error" and "payment error", and a status indication such as "forgetting to take coins", "forgetting to pick up bills", "out of change", "turning off at the end of a bargain", "getting close to change out", and "getting close to a bidding note" may be displayed. In addition, the operation managing unit 156 of the registration device 10 may automatically select the checkout device that guides the customer C2 based on the operation state of the checkout devices 20a and 20b received by the checkout device state receiving unit 154.

Next, by using FIG. 9 and FIG. 10, an example of a screen displayed on the operator side monitor 104 by the display controlling unit 151 of the registration device 10 will be described.

FIG. 9 is a diagram for illustrating an example of a display screen 70a to be displayed on the operator side monitor 104 by the display controlling unit 151 when the commodity registration is performed. As described in FIG. 9, the display controlling unit 151 causes the commodity name of the registered commodity to be displayed in a name field 71a of the display screen 70a. In addition, the display controlling unit 151 causes the unit price of the commodity to be displayed in a unit price field 71c by displaying a purchase point in a point field 71b of the display screen 70a. Furthermore, the display controlling unit 151 controls the total amount of tax to be displayed in a total amount field 71d. When two or more commodities are registered, information of the previously registered commodity is displayed on the upper window of the display screen 70a.

The display controlling unit 151 controls the subtotal button B1 to be displayed at the lower right of the display screen 70a. When the registration of overall commodities is completed, the operator O presses the subtotal button B1. When it is detected that the subtotal button B1 is pressed, the input receiving unit 152 causes a display screen 70b (see FIG. 10) to be displayed with respect to the display controlling unit 151.

FIG. 10 is a diagram for illustrating an example of the display screen 70b to be displayed on the operator side monitor 104 by the display controlling unit 151 when the subtotal button B1 is pressed. As described in FIG. 10, the display controlling unit 151 controls a guidance window W3 for instructing the transfer of the commodity registration information to the checkout machine 2 (i.e., checkout device 20b) that is waiting to be displayed, and an operation instruction window W4 for instructing transfer of the commodity registration information to be displayed, on the display screen 70b. In addition, the display controlling unit 151 controls the transfer button B2 to be displayed inside the operation instruction window W4. Accordingly, when the input receiving unit 152 detects that the transfer button B2 is pressed, the registration information transferring unit 155 transfers the commodity registration information to the checkout device 20b.

Although not illustrated, the display controlling unit 151 controls the commodity information, the total amount, and the like in which the registration is completed, to be displayed on the customer side monitor 107.

### Description of Screen Displayed by Checkout Device

Next, by using FIG. 11, the display controlling unit 51 of the checkout device 20b (see FIG. 6) will be described as an example of a screen displayed on the monitor 203. FIG. 11 is a diagram for illustrating an example of a screen displayed on the monitor 203 by the display controlling unit 51 of the checkout device 20b.

As described in FIG. 11, the display controlling unit 51 controls a total amount field 81a, an input amount field 81b, and a change field 81c to be displayed on a display screen 80. Amounts corresponding to a progress of checkout are displayed on the total amount field 81a, the input amount field 81b, and the change field 81c.

That is, the total amount based on the commodity registration information is displayed on the total amount field 81a. The total amount inserted from the bill slot 22 and the coin slot 21 by the customer C2 (see FIG. 5) is displayed on the input amount field 81b. Accordingly, the change amount is displayed on the change field 81c.

Furthermore, the display controlling unit 51 controls a settlement button B4 for instructing the performance of settlement to be displayed on the display screen 80. When the input receiving unit 52 detects a press of the settlement button B4, the checkout unit 53 performs the settlement. Accordingly, the change is paid out from the bill outlet 23 and the coin outlet 24.

### Description of Process Flow Performed by Registration Device

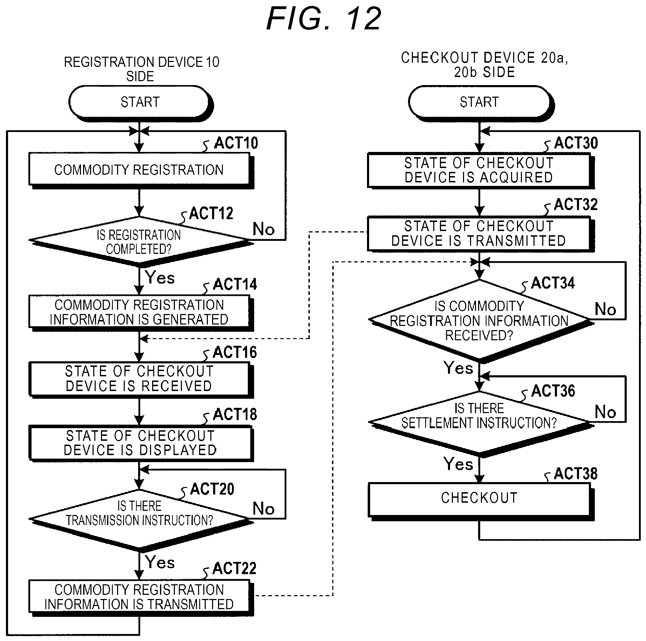

Next, by using FIG. 12, a process flow performed by the registration device 10 will be described. FIG. 12 is a flowchart illustrating an example of a process flow performed by the checkout system 5.

The registration unit 153 performs the commodity registration (Act 10). Specifically, the registration unit 153 specifies the commodity information by checking the commodity code read through the scanner 101 and the touch panel 103 by the operator O against the PLU file F1. Accordingly, the registration unit 153 registers the specified commodity information as the commodity registration information.

The registration unit 153 determines whether the commodity registration is completed (Act 12). Specifically, the registration unit 153 determines whether the subtotal button B1 (see FIG. 9) is pressed. When it is determined that the commodity registration is completed (Act 12: Yes), the process proceeds to Act 14. Meanwhile, when it is not determined that the commodity registration is completed (Act 12: No), the process returns to Act 10, and performs the registration of the next commodity.

When the commodity registration is completed, the registration unit 153 generates the commodity registration information (Act 14).

The checkout device state receiving unit 154 receives information indicating the operation state of the checkout device 20a and the checkout device 20b from the checkout device 20a and the checkout device 20b (Act 16).

The display controlling unit 151 controls information indicating the operation state of the checkout device 20a and the checkout device 20b received by the checkout device state receiving unit 154 to be displayed on the operator side sub-monitor 106 (Act 18).

The registration information transferring unit 155 determines whether or not there is a transfer instruction for transferring the commodity registration information to the checkout device 20a or the checkout device 20b (Act 20). Specifically, the registration information transferring unit 155 determines whether the transfer button B2 is pressed (see FIG. 10). When it is determined that there is the transfer instruction (Act 20: Yes), the process proceeds to Act 22. Meanwhile, when it is not determined that there is the transfer instruction (Act 20: No), the registration information transferring unit 155 repeats the determination in Act 20 until the time-out.

In Act 20, when it is determined as Yes, the registration information transferring unit 155 transfers the commodity registration information to the checkout device 20a or the checkout device 20b that is selected, in Act 22. Then, returning to Act 10, the registration device 10 performs the commodity registration on the next customer.

### Description of Process Flow Performed by Checkout Device

Then, by using FIG. 12, a process flow performed by the checkout device 20a and the checkout device 20b will be described. In the following description, the checkout device 20a will be described. In the checkout device 20b, the same process is also performed.

First, the checkout device state transmitting unit 54 of the checkout device 20a acquires information indicating the operation state of the checkout device 20a from the operation managing unit 57 (Act 30).

Next, the checkout device state transmitting unit 54 transmits information indicating the operation state of the checkout device 20a to the registration device 10 (Act 32).

The registration information receiving unit 55 determines whether the commodity registration information is received from the registration device 10 (Act 34). When it is determined that the commodity registration information is received (Act 34: Yes), the process proceeds to Act 36. Meanwhile, it is not determined that the commodity registration information is received (Act 34: No), until the time-out, the determination in Act 34 is repeated.

In Act 34, when it is determined as Yes, the operation managing unit 57 determines whether there is a settlement instruction in Act 36. When it is determined that there is the settlement instruction (Act 36: Yes), the process proceeds to Act 38. Meanwhile, when it is not determined whether there is the settlement instruction (Act 36: No), until the time-out, the determination in Act 36 is repeated.

In Act 36, when it is determined as Yes, the checkout unit 53 performs the checkout in Act 38. Then, returning to Act 30, the checkout for the next customer is performed.

### Description of Modification Example of Embodiment

Next, by using FIGs. 13A and 13B, a modification example of the embodiment will be described. FIGs. 13A and 13B are external views illustrating a registration device 11 having a configuration different from that of the registration device 10. FIG. 13A is an external view of the registration device 11 viewed from the operator O side. FIG. 13B is an external view of the registration device 11 viewed from the customer C2 side.

The above-described registration device 10 is configured on the premise that the customer C2 (see FIG. 2) proceeds from the right to the left as viewed from the operator O (see FIG. 2). On the other hand, the registration device 11 in FIGs. 13A and 13B is configured on the premise that the customer C2 proceeds from the left to the right as viewed from the operator O.

That is, as described in FIG. 13B, the customer side monitor 107 is installed on the downstream side with respect to the traveling direction of the customer. Therefore, in FIG. 13, the customer side monitor 107 is installed on the back surface side of the keyboard 105.

The registration device 11 includes the operator side monitor 104 to which the touch panel 103 is attached and the keyboard 105 above the scanner 101. Functions of the operator side monitor 104 and the keyboard 105 are the same as those of the registration device 10.

The operator side sub-monitor 106 is installed on the left side of the operator side monitor 104 toward the operator O side. The function of the operator side sub-monitor 106 is the same as that of the registration device 10.

The operator side sub-monitor 106 is installed on the mounting arm 110a protruding from the operator side monitor 104 to the left. At this time, the operator side sub-monitor 106 is installed on the mounting arm 110a with the same structure as the above-described above (see FIG. 4).

The keyboard 105 is installed on the right side of the operator side monitor 104 toward the operator O side. In addition, the customer side monitor 107 is installed toward the customer C2 side.

The customer side monitor 107 is installed on the mounting arm 110b provided by protruding from the operator side monitor 104 to the right. The customer side monitor 107 is installed on the mounting arm 110b with the same structure as the mounting structure for the mounting arm 110a described in the previous embodiment (see FIG. 4).

As described above, the registration device 10 of the embodiment includes the operator side monitor 104 that causes the commodity information of the commodity purchased by the customer C2 registered by the registration unit 153 to be displayed to the operator O. In addition, the registration device 10 includes the customer side monitor 107 that causes the commodity information to be displayed on the customer C2. Furthermore, the registration device 10 includes the operator side sub-monitor 106 that displays information indicating at least a predetermined state in the operation states of the checkout device 20a and the checkout device 20b acquired by the checkout device state receiving unit 154 that acquires the operation state of the checkout device 20a and the checkout device 20b, to the operator O. Therefore, it is possible to provide the commodity sales data registration device capable of notifying the operator side sub-monitor 106 of a state of the checkout devices 20a and 20b without hindering a progress of the registration.

In addition, according to the registration device 10 of the embodiment, information indicates a predetermined state in which the guidance of the customer C2 to the checkout device 20a or the checkout device 20b is suppressed. Therefore, it is possible to suppress the guidance of the customer C2 to the checkout device 20a or the checkout device 20b which cannot perform the checkout.

In addition, according to the registration device 10 of the embodiment, the operator side sub-monitor 106 is detachable. Therefore, when the operator side sub-monitor 106 fails, the operator side sub-monitor 106 can be easily exchanged without affecting the operator side monitor 104.

In addition, according to the registration device 10 of the embodiment, the operator side sub-monitor 106 is installed on the back surface side of the customer side monitor 107. Therefore, when the customer C2 sees the customer side monitor 107, there is no cumbersome impression given to the customer C2. Particularly, when the operator side sub-monitor 106 is implemented smaller than the customer side monitor 107 such that the operator side sub-monitor 106 does not protrude from the back surface side of the customer side monitor 107, there is not further complicated impression on the customer C2.

In addition, according to the registration device 10 of the embodiment, the customer side monitor 107 and the operator side sub-monitor 106 are installed such that a lower end of the customer side monitor 107 and a lower end of the operator side sub-monitor 106 are positioned at approximately the same height. Therefore, the customer C2 can visually recognize that the operator O is holding the commodity over the scanner 101 from a lower side of the customer side monitor 107. With this configuration, a sense of security can be given to the customer C2.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions as defined by the appended claims.

For example, the control program P1 (P2) executed by the controller 150 (50) may be provided in a state stored in the HDD 136 (36), or may be provided by being recorded in a computer-readable recording medium such as a CD-ROM, a flexible disk (FD), a CD-R, and a digital versatile disk (DVD) as a file in an installable format or an executable format. In addition, the control program P1 (P2) may be provided by being downloaded via a network by being stored in a computer connected to the network. Furthermore, the control program P1 (P2) may be provided or distributed via a network such as the Internet.

## Claims

1. A registration device configured to communicate with one or more checkout devices in a checkout system, the registration device comprising:
a scanner configured to scan each of one or more commodities to be purchased by a customer;
a communication interface configured to communicate with the checkout devices;
a first display facing an operator side;
a second display facing a customer side;
a third display facing the operator side; and
a controller configured to
register the commodities scanned by the scanner;
control the first display to display commodity information about the registered commodities,
control the second display to display the commodity information,
control the communication interface to receive from each checkout device status information indicating an operation status of the checkout device, and
control the third display to display the operation status of each checkout device based on the received status information.

2. The registration device according to claim 1, further comprising:
an input unit, wherein
the controller controls the communication interface to transmit the commodity information to one of the checkout devices selected by the operator through the input unit.

3. The registration device according to claim 1 or 2, wherein
the controller controls the communication interface to transmit the commodity information to one of the checkout devices that is not performing checkout for another customer.

4. The registration device according to any of claims 1 to 3, wherein
the operation status indicates whether the checkout device is performing checkout for another customer.

5. The registration device according to any of claims 1 to 4, wherein
the operation status indicates whether an error occurs in the checkout device.

6. The registration device according to any of claims 1 to 5, wherein
the operation status indicates whether an article belonging to another customer has been left in the checkout device.

7. The registration device according to any of claims 1 to 6, wherein
the operation status indicates whether bills or coins for change stored in the checkout device are almost empty.

8. The registration device according to any of claims 1 to 7, wherein
the third display is detachable.

9. The registration device according to any of claims 1 to 8, wherein
the third display is installed on a back surface side of the second display.

10. The registration device according to claim 9, wherein
the second and the third display are installed such that a lower end of the second display and a lower end of the third display are positioned at approximately the same height.

11. A method carried out by a registration device configured to communicate with one or more checkout devices in a checkout system, the method comprising:
register one or more commodities scanned by a scanner;
displaying, on a first display of the registration device facing an operator side, commodity information about the registered commodities;
displaying the commodity information on a second display of the registration device facing a customer side;
receiving from each checkout device status information indicating an operation status of the checkout device; and
displaying, on a third display of the registration device facing the operator side, the operation status of each checkout device based on the received status information.

12. The method according to claim 11, further comprising:
receiving an input from the operator; and
transmitting the commodity information to one of the checkout devices specified by the input.

13. The method according to claim 11 or 12, further comprising:
transmitting the commodity information to one of the checkout devices that is not performing checkout for another customer.

14. The method according to any of claims 11 to 13, wherein the operation status indicates whether the checkout device is performing checkout for another customer.

15. A checkout system comprising:
a registration device; and
one or more checkout devices, wherein
the registration device comprises:
a scanner configured to scan each of one or more commodities to be purchased by a customer;
a communication interface configured to communicate with the checkout devices;
a first display facing an operator side;
a second display facing a customer side;
a third display facing the operator side; and
a controller configured to
register the commodities scanned by the scanner,
control the first display to display commodity information about the registered commodities,
control the second display to display the commodity information,
control the communication interface to receive from each checkout device status information indicating an operation status of the checkout device, and
control the third display to display the operation status of each checkout device based on the received status information.
